Europäisches Patentamt

European Patent Office

Office européen des brevets

(19)

(11) **EP 1 145 139 B1**

(12) **EUROPÄISCHE PATENTSCHRIFT**

(45) Veröffentlichungstag und Bekanntmachung des Hinweises auf die Patenterteilung:
**13.11.2002 Patentblatt 2002/46**

(21) Anmeldenummer: **00908960.8**

(22) Anmeldetag: **01.02.2000**

(51) Int Cl.⁷: $G06F\ 17/14$, $G06F\ 15/78$

(86) Internationale Anmeldenummer:
**PCT/DE00/00270**

(87) Internationale Veröffentlichungsnummer:
**WO 00/049518 (24.08.2000 Gazette 2000/34)**

(54) **VERFAHREN UND VORRICHTUNG ZUM BERECHNEN EINER DISKRETEN ORTHOGONALEN TRANSFORMATION WIE FFT ODER IFFT**

METHOD AND DEVICE FOR CALCULATING A DISCRETE ORTHOGONAL TRANSFORMATION SUCH AS FFT OR IFFT

PROCEDE ET DISPOSITIF DE CALCUL D'UNE TRANSFORMEE ORTHOGONALE DISCRETE TELLE QUE LA FFT OU L'IFFT

(84) Benannte Vertragsstaaten:
**FR GB**

(30) Priorität: **18.02.1999 DE 19906868**

(43) Veröffentlichungstag der Anmeldung:
**17.10.2001 Patentblatt 2001/42**

(73) Patentinhaber: **Infineon Technologies AG**
**81669 München (DE)**

(72) Erfinder: **BACHER, Martin**
**A-9500 Villach (AT)**

(74) Vertreter: **Barth, Stephan Manuel, Dr.**
**Reinhard-Skuhra-Weise & Partner Gbr,**
**Patentanwälte**
**Friedrichstrasse 31**
**80801 München (DE)**

(56) Entgegenhaltungen:
**EP-A- 0 855 657        DE-A- 4 442 958**

- **MA Y. ET AL.: "A Hardware Efficient Control of Memory Addressing for High-Performance FFT Processors" IEEE TRANSACTIONS ON SIGNAL PROCESSING, Bd. 48, Nr. 3, März 2000 (2000-03), XP002146589**

Bemerkungen:
Derzeit sind die WIPO-Publikationsdaten A3 nicht verfügbar.

**Beschreibung**

Die Erfindung betrifft ein Verfahren und eine Schaltung zur Berechnung der Fast-Fourier-Transformation sowie der dazu inversen Transformation, im folgenden als FFT und IFFT bezeichnet, oder ähnlich strukturierter Transformationen, d.h. diskrete orthogonale Transformationen.

Die FFT und IFFT sind in der Nachrichtentechnik äußerst wichtige Transformationen, da sie beispielsweise die Beschreibung eines Sachverhalts im Zeitbereich in eine solche im Frequenzbereich transformieren und umgekehrt.

In der digitalen Signalverarbeitung wird häufig eine sog. N-Punkt diskrete Fourier-Transformation, im folgenden als DFT bezeichnet, berechnet, die wie folgt definiert ist:

$$X(k) = \sum_{n=0}^{N-1} x(n)\ W^{nk} \qquad k = 0,\ 1,\ \ldots,\ N-1$$

mit

$$W = e^{(-j)2\pi/N}$$

Die Komplexität der Berechnung der DFT ist proportional zu $O(N^2)$. Durch die Anwendung der FFT kann die Komplexität der Berechnung auf $O((N\log(N))$ reduziert werden. Dies geschieht durch eine hierarchische Aufteilung der Berechnung in Transformationen kürzerer Folgen.

Zur Berechnung der FFT existieren zwei grundlegende Algorithmen. Der eine wird "Decimation in Frequency" (DIF), der andere "Decimation in Time" (DIT) genannt. Im folgenden wird beispielhaft der DIT-Algorithmus behandelt.

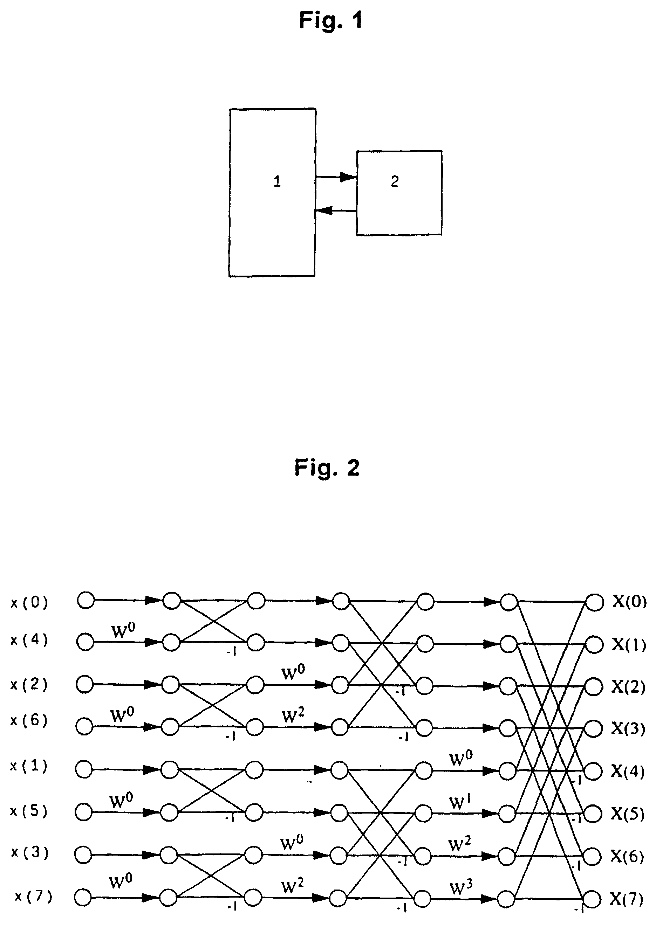

Zur Berechnung der FFT wird bevorzugt die sog. "in-place"-Variante verwendet, bei der errechnete Zwischenergebnisse der Butterfly-Berechnung in denselben Speicher geschrieben werden, von wo sie wiederum gelesen und weiterverwendet werden, wie dies in der Fig. 1 dargestellt ist. Dadurch wird ein besonders sparsamer Umgang mit dem Speicher erreicht.

In der Fig. 2 ist der Berechnungsvorgang der "in-place"-Variante für N = 8 in der Form eines Signalflußgraphen dargestellt. Wie aus der Fig. 2 hervorgeht, müssen die Daten am Anfang der Berechnung im Speicher in einer bestimmten Anordnung vorliegen, die üblicherweise als "bit-reversed" bezeichnet wird. Am Ende der Berechnung kann das Ergebnis linear ausgelesen werden. Die Berechnung selbst geschieht in mehreren Stufen, wie es im Signalflußgraphen der Fig. 2 dargestellt ist. Im genannten Beispiel sind drei Stufen notwendig. Es werden jeweils 2 Daten aus dem Speicher ausgelesen, anschließend wird der Butterfly berechnet und die beiden Resultate werden wieder in dieselben Stellen im Speicher zurückgeschrieben. Dabei liegen die Daten aber nicht unbedingt in benachbarten Speicherstellen. Ferner unterscheidet sich die Berechnung von einer Stufe zur nächsten.

Wird die FFT in integrierten Schaltkreisen realisiert, so wird die Komplexität vor allem durch den verwendeten Speicher bestimmt. Dabei sind große Speicher üblicherweise seitenweise aufgebaut, wodurch der Zugriff auf eine Speicherzelle innerhalb einer solchen Seite sehr schnell ist, beispielsweise ist ein derartiger Speicherzugriff innerhalb eines Taktes durchführbar. Der Wechsel von einer Seite auf eine andere dauert aber wesentlich länger, d.h. mehrere Takte. Bei seitenorientierten Speichern kann man den Durchsatz erhöhen, indem man eine Seite eines Speichers möglichst vollständig bearbeitet und erst dann wieder die Seite wechselt, weil Adressen der anderen Seite benötigt werden. Allerdings werden bei der oben genannten "in-place"-FFT die Daten prinzipiell sehr ungeordnet benötigt. Kleine Speicher haben diesen Nachteil nicht, da hier der Zugriff auf die einzelnen Zellen uneingeschränkt möglich ist.

Daher wird die Geschwindigkeit der FFT vor allem durch die Schnittstelle zum Speicher begrenzt.

Der Erfindung liegt daher die Aufgabe zugrunde, ein Verfahren und eine Vorrichtung zur Berechnung diskreter orthogonaler Transformationen, insbesondere der FFT und IFFT, zu schaffen, womit eine schnellere Berechnung möglich ist.

Die Aufgabe wird durch die Merkmale der unabhängigen Ansprüche gelöst. Bevorzugte Ausgestaltungen der Erfindung sind Gegenstand der Unteransprüche.

Das erste erfindungsgemäße Verfahren zum Berechnen einer orthogonalen diskreten Transformation nach dem DIT-Verfahren in vorgegebenen Zwischenschritten, wobei unter einem Zwischenschritt die Addition sowie Multiplikation einer Verarbeitungsstufe zu verstehen ist, umfaßt die folgenden Schritte:

a) Lesen der Daten aus einem seitenweise organisierten Speicher,
b) Durchführen des durch die Transformation vorgegebenen Zwischenschritts,
c) Speichern der resultierenden Daten in einem Zwischenspeicher, und

d) Seitenweises Schreiben der resultierenden Daten aus dem Zwischenspeicher in den seitenweise organisierten Speicher.

Das erfindungsgemäße Verfahren zum Berechnen einer orthogonalen diskreten Transformation nach dem DIF-Verfahren in vorgegebenen Zwischenschritten weist die folgenden Schritte auf:

a) Lesen der Daten aus einem seitenweise organisierten Speicher,
b) Speichern der Daten in einem Zwischenspeicher,
c) Durchführen des durch die Transformation vorgegebenen Zwischenschritts, und
d) Seitenweises Schreiben der resultierenden Daten aus dem Zwischenspeicher in den seitenweise organisierten Speicher.

Ein drittes erfindungsgemäßes Verfahren zum Berechnen einer orthogonalen diskreten Transformation in vorgegebenen Zwischenschritten weist die folgenden Schritte auf:

a) Lesen der Daten aus zwei seitenweise organisierten Speicher, so daß das Lesen seitenweise organisiert ist,
b) Durchführen des durch die Transformation vorgegebenen Zwischenschritts, und
c) Seitenweises Schreiben der resultierenden Daten in die beiden seitenweise organisierten Speicher.

Als diskrete orthogonale Transformation kommen beispielsweise eine FFT, IFFT, DCT oder IDCT sowie schematisch ähnlich organisierte Transformationen in Frage.

Vorzugsweise weisen die Transformation eine identische Geometrie für jede Stufe auf, was die Adressierung der Resultate erleichtert. Beispielsweise ist diese Bedingung für eine FFT oder IFFT nach Singleton erfüllt.

Entsprechend den obigen Verfahren weisen die erfindungsgemäßen Vorrichtungen

einen seitenweise organisierten Speicher, eine Recheneinheit und einen nach der Recheneinheit angeordneten direkt organisierten Speicher, oder

einen seitenweise organisierten Speicher, eine Recheneinheit und einen vor der Recheneinheit angeordneten direkt organisierten Zwischenspeicher, oder

zwei seitenweise organisierten Speicher und eine Recheneinheit auf.

Dabei realisiert die Recheneinheit eine sog. Butterfly.

Bevorzugte Ausführungsformen der Erfindung werden nachfolgend anhand der Zeichnungen erläutert.

Fig. 1 zeigt das Schema der Berechnung einer "in place"-FFT,

Fig. 2 zeigt den Signalflußgraphen einer "in place"-FFT für N = 8,

Fig. 3 zeigt den Signalflußgraphen einer "Singleton"-FFT für N = 8,

Fig. 4 zeigt eine erste Ausführungsform zur Berechnung einer FFT, und

Fig. 5 zeigt eine zweite Ausführungsform zur Berechnung einer FFT nach dem DIT-Verfahren.

Fig. 1 zeigt die oben bereits erwähnte übliche "in-place"-Berechnung einer FFT, wobei aus einem Speicher 1, üblicherweise eine DRAM ein Datenpaar gelesen wird, in einer Butterfly-Einheit 2 verknüpft und wieder in den Speicher 1 geschrieben werden.

Fig. 2 zeigt den grundlegenden DIT-Algorithmus einer FFT-Berechnung für N = 8. Die Daten x(0) bis x(7) müssen zur Berechnung am Anfang "bit-reversed" im Speicher vorliegen. Dargestellt ist der Signalflußgraph zur Berechnung der 8 Fourierkomponenten X(0) - X(7). Der Algorithmus sowie der Signalflußgraph ist A.V.Oppenheim, R. W.Schafer: "Digital Signal Processing", Prentice-Hall Inc., Englewood Cliffs, New Jersey, USA, 1975, S. 285 ff, beschrieben, so daß hier nicht näher darauf eingegangen werden braucht. Hinsichtlich der Nomenklatur werden die Faktoren $W^0$, $W^1$ und $W^2$ auch als Twiddle-Faktoren bezeichnet.

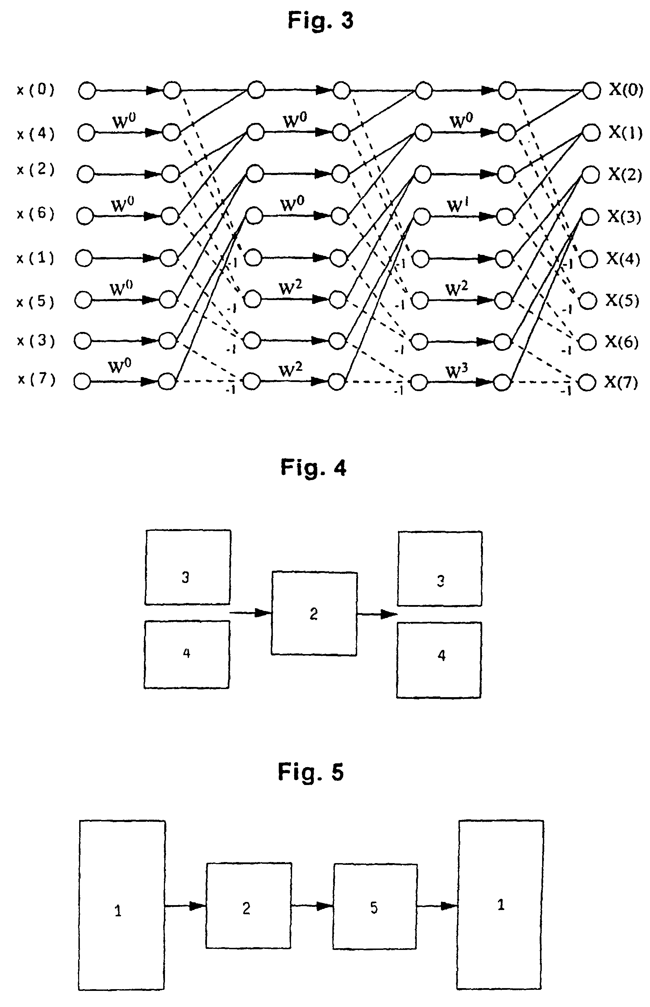

Fig. 3 zeigt einen FFT-Algorithmus mit einer veränderten Abfolge der Rechenoperationen, den sog. Singleton-Algorithmus, der in der oben genannten Literaturstelle Oppenheimer-Schafer auf S. 301 beschrieben ist, und der in dem erfindungsgemäßen Verfahren verwendet wird. Es ist deutlich zu erkennen, daß die Daten sehr regelmäßig abgearbeitet werden, allerdings wird keine "in place"- Verarbeitung durchgeführt. Es wird daher der doppelte Speicherplatz im Vergleich zur "in place"-Berechnung benötigt.

Vorteilhafterweise ist die Berechnung in jeder Stufe völlig gleich aufgebaut, mit Ausnahme der Twiddle-Faktoren. D.h. die Stufen des beispielhaften Algorithmus einer FFT für N = 8 weisen eine identische Geometrie auf. Nach Abarbeitung einer Stufe wird vom zuletzt geschriebenen Speicher gelesen und in einen anderen Speicher geschrieben.

Der Speicher kann linear gelesen werden. Ein lineares Schreiben ist bei dem Algorithmus jedoch noch nicht möglich, da immer ein Ergebnis in der oberen Hälfte (volle Linie) und ein Ergebnis in der unteren Hälfte (gestrichelte Linie) gespeichert werden muß. Allerdings kann in der oberen bzw. unteren Hälfte linear geschrieben werden.

Fig. 4 zeigt eine schematische Darstellung einer ersten erfindungsgemäßen Ausführungsform zur schnellen Berechnung eines Algorithmus, der ein ähnliches oder gleiches Schema wie der in Fig. 3 dargestellt Singleton-Algorithmus aufweist. Eine derartige Vorrichtung, die sowohl zur DIF- als auch DIT-Berechnung geeignet ist, ist der zur Berechnung notwendige Speicher in zwei gleich große seitenorientierte Speicher 3, 4 unterteilt, die als DRAMs ausgelegt sind (DRAM = Dynamischer RAM). Durch die Verwendung von zwei seitenorientierten Speichern 1 und 2 kann jeder Speicher in sich linear geschrieben werden, d.h. es wird jeweils ein Speicher für die obere und untere Hälfte des Algorithmus nach Fig. 3 verwendet so daß die Anzahl der langsamen Seitenwechsel gering ist. Allerdings verdoppelt sich die Anzahl der Speicher und diejenige der Schnittstellen.

Eine, in der Fig. 5 dargestellt zweite Ausführungsform zur schnellen Berechnung einer DIT-Transformation wie die der Fig. 3 ist die Verwendung eines kleinen schnellen Speichers 5, der nach der Butterfly 2 angeordnet ist. Dort werden einige Zwischenergebnisse der Berechnung zwischengespeichert, um sie dann ohne ständigen Seitenwechsel in den seitenorientierten Speicher 1 zu schreiben. Die Berechnung verläuft nun, indem aus dem Speicher 1 zwei Daten gelesen, der Butterfly zugeführt und die Zwischenergebnisse im schnellen SRAM-Speicher 5 (SRAM = Statisches RAM) gespeichert werden. Die Zwischenergebnisse werden dann seitenweise in den seitenorientierten Speicher 1 geschrieben.

Bei einer Berechnung nach dem DIF-Verfahren sitzt der statische schnelle Speicher 5 am Eingang der Butterfly 2 (nicht dargestellt). Ansonsten ist die Funktionsweise analog zu derjenigen der erläuterten DIT-Variante.

Die folgende Tabelle 1 soll das Adressierungsschema der Berechnung mittels Zwischenspeicherung verdeutlichen:

Tabelle 1

| DRAM (RD) | Butterfly | SRAM (WR) | SRAM (RD) | DRAM (WR) |
|-----------|-----------|-----------|-----------|-----------|
| 0 | 0 | 0 | | |
| 1 | 16 | 8 | | |
| 2 | 1 | 1 | | |
| 3 | 17 | 9 | | |
| 4 | 2 | 2 | 0 | 0 |
| 5 | 18 | 10 | 1 | 1 |
| 6 | 3 | 3 | 2 | 2 |
| 7 | 19 | 11 | 3 | 3 |
| 8 | 4 | 4 | 8 | 16 |
| 9 | 20 | 12 | 9 | 17 |
| 10 | 5 | 5 | 10 | 18 |
| 11 | 21 | 13 | 11 | 19 |
| 12 | 6 | 6 | 4 | 4 |
| 13 | 22 | 14 | 5 | 5 |
| 14 | 7 | 7 | 6 | 6 |
| 15 | 23 | 15 | 7 | 7 |
| 16 | 8 | 0 | 12 | 20 |
| 17 | 24 | 8 | 13 | 21 |
| 18 | 9 | 1 | 14 | 22 |
| 19 | 25 | 9 | 15 | 23 |
| 20 | 10 | 2 | 0 | 8 |
| 21 | 26 | 10 | 1 | 9 |
| 22 | 11 | 3 | 2 | 10 |
| 23 | 27 | 11 | 3 | 11 |
| 24 | 12 | 4 | 8 | 24 |

Tabelle 1 (fortgesetzt)

| DRAM (RD) | Butterfly | SRAM (WR) | SRAM (RD) | DRAM (WR) |
|---|---|---|---|---|
| 25 | 28 | 12 | 9 | 25 |
| 26 | 13 | 5 | 10 | 26 |
| 27 | 29 | 13 | 11 | 27 |
| 28 | 14 | 6 | 4 | 12 |
| 29 | 30 | 14 | 5 | 13 |
| 30 | 15 | 7 | 6 | 14 |
| 31 | 31 | 15 | 7 | 15 |
|  |  |  | 12 | 28 |
|  |  |  | 13 | 29 |
|  |  |  | 14 | 30 |
|  |  |  | 15 | 31 |

In dem Beispiel hat der seitenorientierte Speicher eine Tiefe von N = 32, so daß eine FFT mit 32 Punkten berechnet werden kann. Eine Seite des langsamen seitenorientierten Speichers habe beispielsweise P = 4 Adressen und der verwendete schnelle Speicher sei S = 4·P = 16 Adressen groß. Die Daten können linear in der Reihenfolge 0, 1, 2, ... gelesen werden. Beispielsweise wird zur Bearbeitung durch die Butterfly die Daten der DRAM Adressen 0 und 1 gelesen (RD). Es ergeben sich durch die Zwischenergebnisse der Butterfly Adressen 0 und 16. Diese werden in die Adressen 0 und 8 des schnellen Zwischenspeichers SRAM geschrieben (WR). Mit einer Verzögerung, die zum teilweisen Füllen des Speichers benötigt wird, werden die Daten seitenweise linear ausgelesen, also in der Tabelle 1 unter SRAM (RD) die Adressen 0-3, anschließend 8-11, usw. Der Inhalt dieser SRAM-Adressen wird in die entsprechenden, durch die Transformation bedingten Adressen des langsamen seitenorientierten Speichers (Spalte DRAM (WR)) seitenweise linear geschrieben, also im Beispiel nach 0-3, 16-19, 4-7 usw. Durch die Verwendung des kleinen schnellen Speichers wird daher der Zugriff auf den seitenorientierten Speicher DRAM derart optimiert, daß möglichst wenige langsame Seitenwechsel notwendig sind.

Die obengenannten und erläuterten Transformationen sowie Speichergrößen dienen nur zur Erläuterung. In der Praxis ist der langsame Speicher wesentlich größer als der schnelle Speicher. Beispielsweise ist üblicherweise der langsame Speicher für N = 8192 ausgelegt, wobei der langsame Speicher eine Seitengröße von P = 16 aufweist. Daher hat der kleine Speicher eine Größe von 64 Adressen. In einer integrierten Realisierung fällt der schnelle kleine Speicher daher flächenmäßig kaum ins Gewicht, allerdings wird die Berechnung der FFT oder IFFT oder ähnlicher diskreter orthogonaler Transformationen durch die Minimierung der Seitenwechsel des langsamen Speichers erheblich beschleunigt.

Bezugszeichenliste

1　seitenorientierter Speicher
2　Butterfly
3　seitenorientierter Speicher
4　seitenorientierter Speicher
5　schneller Speicher

**Patentansprüche**

**1.**　Verfahren zum Berechnen einer orthogonalen diskreten Transformation nach dem DIT-Verfahren in vorgegebenen Zwischenschritten,
　　**dadurch gekennzeichnet, daß**

　　a) die Daten aus einem seitenweise organisierten Speicher (1) gelesen werden,

b) der durch die Transformation vorgegebene Zwischenschritt durchgeführt wird,

c) die resultierenden Daten in einen Zwischenspeicher (5) abgespeichert werden, und

d) die resultierenden Daten aus dem Zwischenspeicher (5) seitenweise in den seitenweise organisierten Speicher (1) geschrieben werden.

**2.** Verfahren zum Berechnen einer orthogonalen diskreten Transformation nach dem DIF-Verfahren in vorgegebenen Zwischenschritten,
   **dadurch gekennzeichnet, daß**

a) die Daten aus einem seitenweise organisierten Speicher (1) gelesen werden,

b) die Daten in einen Zwischenspeicher (5) abgespeichert werden,

c) der durch die Transformation vorgegebene Zwischenschritt durchgeführt wird, und

d) die resultierenden Daten seitenweise in den seitenweise organisierten Speicher (1) geschrieben werden.

**3.** Verfahren zum Berechnen einer orthogonalen diskreten Transformation in vorgegebenen Zwischenschritten,
   **dadurch gekennzeichnet, daß**
die Daten derart aus zwei seitenweise organisierten Speicher (3, 4) gelesen werden, daß das Lesen seitenweise organisiert ist,
der durch die Transformation vorgegebene Zwischenschritt durchgeführt wird, und
die resultierenden Daten wieder seitenweise in die beiden seitenweise organisierten Speicher (3, 4) geschrieben werden.

**4.** Verfahren nach einem der Ansprüche 1 bis 3, **dadurch gekennzeichnet, daß** die diskrete orthogonale Transformation durch eine FFT, IFFT, DCT oder IDCT gebildet wird.

**5.** Verfahren nach Anspruch 4, **dadurch gekennzeichnet, daß** die Transformation eine identische Geometrie für jede Stufe aufweist.

**6.** Verfahren nach Anspruch 5, **dadurch gekennzeichnet, daß** eine FFT oder IFFT nach Singleton verwendet wird.

**7.** Vorrichtung zur Durchführung des Verfahrens nach einem der Ansprüche 1, 4-6,
   **dadurch gekennzeichnet, daß**
die Vorrichtung einen seitenweise organisierten Speicher (1), eine Recheneinheit (2) und einen nach der Recheneinheit angeordneten direkt organisierten Speicher (5) aufweist.

**8.** Vorrichtung zur Durchführung des Verfahrens nach einem der Ansprüche 2, 4-6,
   **dadurch gekennzeichnet, daß**
die Vorrichtung einen seitenweise organisierten Speicher (1), eine Recheneinheit (2) und einen vor der Recheneinheit angeordneten direkt organisierten Zwischenspeicher (5) aufweist.

**9.** Vorrichtung nach einem der Ansprüche 7 oder 8, **dadurch gekennzeichnet, daß** der seitenorientierte Speicher (1) im Verhältnis zu dem direkt organisierten Zwischenspeicher (5) ein großer Speicher ist.

**10.** Vorrichtung nach Anspruch 9, **dadurch gekennzeichnet, daß** für den Zwischenspeicher (5) ein schneller Speicher verwendet wird.

**11.** Vorrichtung nach einem der Ansprüche 7- 10, **dadurch gekennzeichnet, daß** der seitenorientierte Speicher (1) ein DRAM und der Zwischenspeicher (5) ein SRAM ist.

**12.** Vorrichtung nach einem der Ansprüche 7 - 11, **dadurch gekennzeichnet, daß** der seitenorientierte Speicher (1) eine Größe von 8 K Adressen und der Zwischenspeicher (5) eine Größe von 32 - 64 Adressen hat.

**13.** Vorrichtung zur Durchführung des Verfahrens nach einem der Ansprüche 3, 4-6,
   **dadurch gekennzeichnet, daß**
die Vorrichtung zwei seitenweise organisierten Speicher (3, 4) und eine Recheneinheit (2) aufweist.

**14.** Vorrichtung nach Anspruch 13, **dadurch gekennzeichnet, daß** die seitenorientierten Speicher (3, 4) gleich groß sind.

**15.** Vorrichtung nach Anspruch 14, **dadurch gekennzeichnet, daß** der seitenorientierte Speicher (3, 4) eine Größe von 4K Adressen aufweist.

**16.** Vorrichtung nach einem der Ansprüche 7 - 15, **dadurch gekennzeichnet, daß** die Recheneinheit (2) durch einen Butterfly realisiert.

**Claims**

**1.** Method for calculating an orthogonal discrete transform on the basis of the DIT method in prescribed intermediate steps,
**characterized in that**

a) the data are read from a memory (1) organized on a page-for-page basis,
b) the intermediate step prescribed by the transform is carried out,
c) the resulting data are stored in a buffer memory (5), and
d) the resulting data are written page-for-page from the buffer memory (5) to the memory (1) organized on a page-for-page basis.

**2.** Method for calculating an orthogonal discrete transform on the basis of the DIF method in prescribed intermediate steps,
**characterized in that**

a) the data are read from a memory (1) organized on a page-for-page basis,
b) the data are stored in a buffer memory (5),
c) the intermediate step prescribed by the transform is carried out, and
d) the resulting data are written page-for-page to the memory (1) organized on a page-for-page basis.

**3.** Method for calculating an orthogonal discrete transform in prescribed intermediate steps,
**characterized in that**
the data are read from two memories (3, 4) organized on a page-for-page basis such that the reading is organized on a page-for-page basis,
the intermediate step prescribed by the transform is carried out, and
the resulting data are again written page-for-page to the two memories (3, 4) organized on a page-for-page basis.

**4.** Method according to one of Claims 1 to 3,
**characterized in that** the discrete orthogonal transform is formed by an FFT, IFFT, DCT or IDCT.

**5.** Method according to Claim 4, **characterized in that** the transform has an identical geometry for each stage.

**6.** Method according to Claim 5, **characterized in that** an FFT or IFFT based on Singleton is used.

**7.** Apparatus for carrying out the method according to one of Claims 1, 4-6,
**characterized in that**
the apparatus has a memory (1) organized on a page-for-page basis, a processor (2) and a directly organized memory (5) which is arranged downstream of the processor.

**8.** Apparatus for carrying out the method according to one of Claims 2, 4-6,
**characterized in that**
the apparatus has a memory (1) organized on a page-for-page basis, a processor (2) and a directly organized buffer memory (5) which is arranged upstream of the processor.

**9.** Apparatus according to one of Claims 7 or 8,
**characterized in that** the page-oriented memory (1) is a large memory in relation to the directly organized buffer memory (5).

**10.** Apparatus according to Claim 9, **characterized in that** a fast memory is used for the buffer memory (5).

**11.** Apparatus according to one of Claims 7-10,
**characterized in that** the page-oriented memory (1) is a DRAM and the buffer memory (5) is an SRAM.

**12.** Apparatus according to one of Claims 7 - 11,
**characterized in that** the page-oriented memory (1) has a size of 8 K addresses and the buffer memory (5) has a size of 32 - 64 addresses.

**13.** Apparatus for carrying out the method according to one of Claims 3, 4-6,
**characterized in that**
the apparatus has two memories (3, 4) organized on a page-for-page basis and a processor (2).

**14.** Apparatus according to Claim 13, **characterized in that** the page-oriented memories (3, 4) are of the same size.

**15.** Apparatus according to Claim 14, **characterized in that** the page-oriented memory (3, 4) has a size of 4 K addresses.

**16.** Apparatus according to one of Claims 7 - 15,
**characterized in that** the processor (2) provides by [sic] a Butterfly.

**Revendications**

**1.** Procédé de calcul d'une transformée orthogonale discrète selon le procédé DIT par des étapes intermédiaires prédéterminées, **caractérisé en ce que** :

a) les données sont lues dans une mémoire paginée (1),
b) l'étape intermédiaire prédéterminée par la transformée est réalisée,
c) les données obtenues sont mémorisées dans une mémoire tampon (5), et
d) les données obtenues dans la mémoire tampon (5) sont écrites en mode paginé dans la mémoire paginée (1).

**2.** Procédé de calcul d'une transformée orthogonale discrète selon le procédé DIF par étapes intermédiaires prédéterminées, **caractérisé en ce que** :

a) les données sont lues dans une mémoire paginée (1),
b) les données sont mémorisées dans une mémoire tampon (5),
c) l'étape intermédiaire prédéterminée par la transformée est réalisée, et
d) les données obtenues sont écrites en mode paginé dans la mémoire paginée (1).

**3.** Procédé de calcul d'une transformée orthogonale discrète par étapes intermédiaires prédéterminées, **caractérisé en ce que** :

les données sont lues dans deux mémoires paginées (3, 4) si bien que la lecture est paginée,
l'étape intermédiaire prédéterminée par la transformée est réalisée, et
les données obtenues sont réécrites en mode paginé dans les deux mémoires paginées (3, 4).

**4.** Procédé selon l'une quelconque des revendications 1 à 3, **caractérisé en ce que** la transformée orthogonale discrète est formée par une FFT, une IFFT, une DCT ou une IDCT.

**5.** Procédé selon la revendication 4, **caractérisé en ce que** la transformée présente une géométrie identique pour chaque étape.

**6.** Procédé selon la revendication 5, **caractérisé en ce qu'**on utilise une FFT ou une IFFT selon Singleton.

**7.** Dispositif pour réaliser le procédé selon l'une quelconque des revendications 1, 4-6, **caractérisé en ce que** :

le dispositif présente une mémoire paginée (1), une unité de calcul (2) et une mémoire directement organisée (5) agencée après l'unité de calcul.

**8.** Dispositif pour réaliser le procédé selon l'une quelconque des revendications 2, 4-6, **caractérisé en ce que** le dispositif présente une mémoire paginée (1), une unité de calcul (2) et une mémoire tampon directement organisée (5) agencée avant l'unité de calcul.

**9.** Dispositif selon l'une quelconque des revendications 7 ou 8, **caractérisé en ce que** la mémoire (1) orientée en mode paginé est une grande mémoire par rapport à la mémoire tampon (5) directement organisée.

**10.** Dispositif selon la revendication 9, **caractérisé en ce que** l'on utilise pour la mémoire tampon (5) une mémoire rapide.

**11.** Dispositif selon l'une quelconque des revendications 7 à 10, **caractérisé en ce que** la mémoire (1) orientée en mode paginé est une DRAM et la mémoire tampon (5) une SRAM.

**12.** Dispositif selon l'une quelconque des revendications 7 à 11, **caractérisé en ce que** la mémoire (1) orientée en mode paginé a une capacité de 8K adresses et la mémoire tampon (5) une capacité de 32-64 adresses.

**13.** Dispositif de réalisation du procédé selon l'une quelconque des revendications 3, 4-6, **caractérisé en ce que** :

le dispositif présente deux mémoires paginées (3, 4) et une unité de calcul (2).

**14.** Dispositif selon la revendication 13, **caractérisé en ce que** les mémoires (3, 4) orientées en mode paginé sont de même capacité.

**15.** Dispositif selon la revendication 14, **caractérisé en ce que** les mémoires (3, 4) orientées en mode paginé présentent une capacité de 4K adresses.

**16.** Dispositif selon l'une quelconque des revendications 7 à 15, **caractérisé en ce que** l'unité de calcul (2) est réalisée par un système Butterfly.

# Fig. 1

# Fig. 2

## Fig. 3

## Fig. 4

## Fig. 5